# EUROPEAN PATENT APPLICATION

(11) **EP 4 191 720 A1**
(43) Date of publication of application: **07.06.2023**
(21) Application number: 21954415.2
(22) Date of filing: 27.12.2021
(51) Int. Cl.: H01M 8/0606, C01B 3/04

(54) **MODULE FOR SUPPLYING HYDROGEN FUEL CELL BY HYDROGEN PRODUCTION AND PURIFICATION APPARATUS**

(30) Priority: 27.09.2021 CN 202122354191 U
(71) Applicant: Fujian Cross-Strait Environmental Engineering Co., Ltd., Fuzhou, Fujian 350415 (CN)
(72) Inventor: YU, Shoubin, Fuzhou, Fujian 350415 (CN)
(74) Representative: Loo, Chi Ching
(86) International application number: PCT/CN2021/141460
(87) International publication number: WO 2023/045155

(57) **Abstract**

The invention provides a module for fueling a hydrogen cell by using a hydrogen production and purification device, comprising a hydrogen production device, a hydrogen purification device and a hydrogen cell power generation system. The hydrogen production device comprises: a housing, a cavity being formed in the housing, and a first opening, a second opening and a third opening which all communicate with the cavity being formed in the housing; a plasma generating unit contained in the cavity and comprising a first electrode and a second electrode, the first electrode being close to the first opening, and the second electrode being close to the second opening; a voltage supply unit, a power supply end of the voltage supply unit being electrically connected to the first electrode and the second electrode, and a potential difference exists between the first electrode and the second electrode to generate plasma; a feeding unit communicating with the first opening; and an exhaust unit, an input end of the exhaust unit communicating with the second opening.

## Description

### BACKGROUND OF THE INVENTION

### 1. Technical Field

The invention relates to the field of hydrogen cells, in particular to a module for fueling a hydrogen cell by using a hydrogen production and purification device.

### 2. Description of Related Art

A hydrogen fueling station is a station providing hydrogen for fuel cell vehicles. As an infrastructure that provides hydrogen for fuel cell vehicles, the hydrogen fueling station may provide hydrogen for fuel cell vehicles.

The ordinary elementary state of the most important component hydrogen is hydrogen gas, which is colorless, tasteless and odorless, extremely inflammable, and composed of diatomic molecules. Hydrogen is the lightest gas and a clean and renewable energy source with high energy density.

When a hydrogen cell is fueled by an existing hydrogen production device, transmission and storage devices are needed to transfer and store hydrogen, and a hydrogenation gun is required for fueling, resulting in poor flexibility, great dependence on external gas filling devices and limited use.

### BRIEF SUMMARY OF THE INVENTION

The purpose of the invention is to provide a module for fueling a hydrogen cell by using a hydrogen production and purification device.

The invention aims to solve the problems existing when an existing hydrogen cell uses hydrogen.

Compared to prior art, the technical solution and beneficial effects of the invention are as follow:

A module for fueling a hydrogen cell by using a hydrogen production and purification device comprises a hydrogen production device, a hydrogen purification device and a hydrogen cell power generation system. The hydrogen production device comprises: a housing, a cavity being formed in the housing, and a first opening, a second opening and a third opening which all communicate with the cavity being formed in the housing; a plasma generating unit contained in the cavity and comprising a first electrode and a second electrode, the first electrode being close to the first opening, the second electrode being close to the second opening, and a plasma column being formed between the first electrode and the second electrode; a voltage supply unit, a power supply end of the voltage supply unit being electrically connected to the first electrode and the second electrode, and a potential difference exists between the first electrode and the second electrode to generate plasma; a feeding unit communicating with the first opening; and an exhaust unit, an input end of the exhaust unit communicating with the second opening, and the exhaust unit being used for allowing air in the cavity to generate an air current flowing from the first opening to the second opening via the second opening, so that the plasma between the first electrode and the second electrode is affected by the air current to form the plasma column. An input end of the hydrogen purification device communicates with an output end of the exhaust unit. The hydrogen cell power generation system communicates with an output end of the hydrogen purification device.

As a further improvement, the feeding unit comprises a receiving chamber and an oscillator, the receiving chamber is used for receiving a hydrogen-containing substance, and the oscillator is used for making contact with the hydrogen-containing substance.

As a further improvement, the hydrogen-containing substance is ammonia liquid.

As a further improvement, the voltage supply unit is used for supplying an alternating current to the first electrode and the second electrode, the frequency of the alternating current is 2-20 kHz, and the voltage of the alternating current is 4000-14000 V.

The invention has the beneficial effects that:
Through the combined application of the hydrogen production device, the hydrogen purification device and the hydrogen cell power generation system, the first electrode and the second electrode are connected to the voltage supply unit, the voltage supply unit outputs high-frequency power so that a potential difference exists between the first electrode and the second electrode to generate the plasma, the plasma forms the plasma column under the separation and guidance of an air pump, the plasma column helps an ammonia solution extract hydrogen components through decomposition to provide a hydrogen source, which is safe and environment-friendly, and the hydrogen source is collected by the exhaust unit, then transferred to the purification equipment for treatment and then directly transmitted to the hydrogen cell. The invention adopts the environment-friendly ammonia solution to generate hydrogen, no pollutant is discharged, and air pollution is avoided, thus improving the practicability of the product.

### BRIEF DESCRIPTION OF THE SEVERAL VIEWS OF THE DRAWINGS

Fig. 1 is a structural diagram of a hydrogen production device provided by an embodiment of the invention.
Fig. 2 is a structural diagram of a module for fueling a hydrogen cell by using a hydrogen production and purification device provided by an embodiment of the invention.

In the drawings:
10. hydrogen production device 11. housing 111. first opening
12. second opening 113. cavity 114. third opening
12. plasma generating unit 121. first electrode 122. second electrode
13. feeding unit 131. receiving chamber 132. oscillator
14. exhaust unit 15. voltage supply unit 16. plasma column
20. hydrogen cell power generation system 30. hydrogen purification device

### DETAILED DESCRIPTION OF THE INVENTION

In order to make the purpose, technical solution and advantages of the embodiments of the invention clearer, the technical solution in the embodiments of the invention will be described clearly and completely with reference to the drawings in the embodiments of the invention. Obviously, the described embodiments are only part of the embodiments of the invention, not all the embodiments. Based on the embodiments in this invention, all other embodiments obtained by those of ordinary skill in the art without creative labor belong to the protection scope of this invention. Therefore, the following detailed description of the embodiments of the invention provided in the drawings is not intended to limit the scope of the Claimed invention, but only represents the selected embodiments of the invention. Based on the embodiments in this invention, all other embodiments obtained by those of ordinary skill in the art without creative labor belong to the protection scope of this invention.

In the description of the invention, the terms "first" and "second" are only used for descriptive purposes, and should not be understood as indicating or implying relative importance or implicitly indicating the number of indicated technical features. Therefore, the features defined with "first" and "second" may explicitly or implicitly include one or more of the features. In the description of the invention, "a plurality of' means two or more, unless otherwise specifically defined.

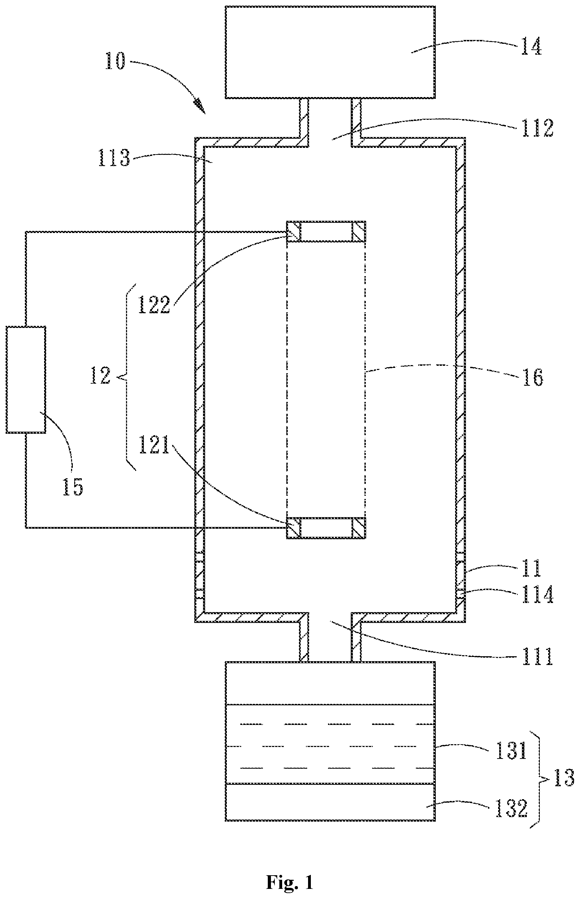

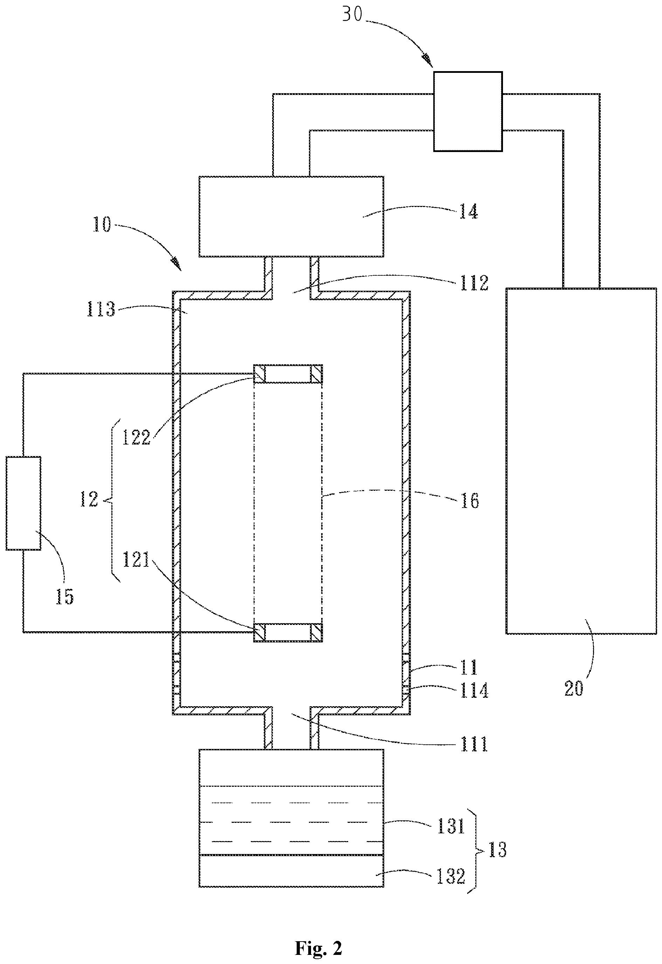

Referring to Figs. 1 and 2, a module for fueling a hydrogen cell by using a hydrogen production and purification device comprises a hydrogen production device 10, a hydrogen purification device 30 and a hydrogen cell power generation system 20. The hydrogen production device 10 comprises: a housing 11, a cavity 113 being formed in the housing 11, and a first opening 111, a second opening 112 and a third opening 114 which all communicate with the cavity 113 being formed in the housing 11; a plasma generating unit 12 contained in the cavity 113 and comprising a first electrode 121 and a second electrode 122, the first electrode 121 being close to the first opening 111, the second electrode 122 being close to the second opening 112, and a plasma column 16 being formed between the first electrode 121 and the second electrode 122; a voltage supply unit 15, a power supply end of the voltage supply unit 15 being electrically connected to the first electrode 121 and the second electrode 122, and a potential difference exists between the first electrode 121 and the second electrode 122 to generate plasma; a feeding unit 13 communicating with the first opening 111; and an exhaust unit 14, an input end of the exhaust unit 14 communicating with the second opening 112, and the exhaust unit 14 being used for allowing air in the cavity 113 to generate an air current flowing from the first opening 111 to the second opening 112 via the second opening 112, so that the plasma between the first electrode 121 and the second electrode 122 is affected by the air current to form the plasma column. An input end of the hydrogen purification device 30 communicates with an output end of the exhaust unit 14. The hydrogen cell power generation system 20 communicates with an output end of the hydrogen purification device 30.

In this embodiment, a position of the third opening 114 is lower than a height of the first electrode 121.

The feeding unit 13 comprises a receiving chamber 131 and an oscillator 132, the receiving chamber 131 is used for receiving a hydrogen-containing substance, and the oscillator 132 is used for making contact with the hydrogen-containing substance.

The hydrogen-containing substance is ammonia liquid. The exhaust unit 14 is an air pump.

The voltage supply unit 15 is used for supplying an alternating current to the first electrode 121 and the second electrode 122, the frequency of the alternating current is 2-20 kHz, and the voltage of the alternating current is 4000-14000 V.

The working principle of the module for fueling the hydrogen cell by using the hydrogen production and purification device provided by the invention is as follows:

The housing 11 is provided with a third through hole for air circulation, so that a small amount of air may be stored in the housing 11. The ammonia solution is added into the receiving chamber 131 of the feeding unit 13, and the oscillator 132 is in contact with the ammonia solution. The oscillator 132 may be a piezoelectric element that generates high-frequency oscillation, so that the liquid ammonia solution forms a plurality of fine liquid particles, which are scattered in the housing 11 or enter the housing 11 with an air current. The first electrode 121 and the second electrode 122 are connected to the voltage supply unit 15, and the voltage supply unit 15 supplies the alternating current to the first electrode 121 and the second electrode 122, wherein the frequency of the alternating current is 2-20 kHz, and the voltage is 4000-14000 V. The air and the liquid particles of the ammonia solution are mixed between the first electrode 121 and the second electrode 122, and a plasma chemical reaction occurs under the action of the plasma column between the first electrode 121 and the second electrode 122. The reaction process is as follows: the plasma column 16 has many charged particles in a high-energy free state, and when entering the housing 11, the liquid particles of the ammonia solution will be impacted by the charged particles, which will destroy a carbon-hydrogen bond, thus generating hydrogen components; and the hydrogen-containing substance is decomposed into hydrogen components, which are delivered to the hydrogen purification device 30 through the exhaust unit 14, and the hydrogen purified by the hydrogen purification device 30 is transferred to the hydrogen cell power generation system 20, wherein the hydrogen purification device 30 uses electrolytic hydrogen as a raw material, which is subjected to catalytic deoxidization, cooling, adsorption and secondary drying, and then passes through a filter to remove impurities such as oxygen, water vapor and dust in the hydrogen to obtain high-purity hydrogen. The purity of high-purity hydrogen in a product may reach over 99.9995%, which is the prior art and will not be described in detail.

The above embodiments are only used to explain the technical solution of the invention, but not to limit it. Those skilled in the art should understand that any modifications and equivalent substitutions that do not depart from the spirit and scope of the invention shall fall within the protection scope of the Claims of the invention.

## Claims

1. A module for fueling a hydrogen cell by using a hydrogen production and purification device, comprising:
a hydrogen production device which comprises:
a housing, a cavity being formed in the housing, and a first opening, a second opening and a third opening which all communicate with the cavity being formed in the housing;
a plasma generating unit contained in the cavity and comprising a first electrode and a second electrode, the first electrode being close to the first opening, the second electrode being close to the second opening, and a plasma column being formed between the first electrode and the second electrode;
a voltage supply unit, a power supply end of the voltage supply unit being electrically connected to the first electrode and the second electrode, and a potential difference exists between the first electrode and the second electrode to generate plasma;
a feeding unit communicating with the first opening; and
an exhaust unit, an input end of the exhaust unit communicating with the second opening, and the the exhaust unit being used for allowing air in the cavity to generate an air current flowing from the first opening to the second opening via the second opening, so that the plasma between the first electrode and the second electrode is affected by the air current to form the plasma column;
a hydrogen purification device, an input end of the hydrogen purification device communicating with an output end of the exhaust unit; and
a hydrogen cell power generation system communicating with an output end of the hydrogen purification device.

2. The module for fueling the hydrogen cell by using the hydrogen production and purification device according to Claim 1, wherein the feeding unit comprises a receiving chamber and an oscillator, the receiving chamber is used for receiving a hydrogen-containing substance, and the oscillator is used for making contact with the hydrogen-containing substance.

3. The module for fueling the hydrogen cell by using the hydrogen production and purification device according to Claim 2, wherein the hydrogen-containing substance is ammonia liquid.

4. The module for fueling the hydrogen cell by using the hydrogen production and purification device according to Claim 1, wherein the voltage supply unit is used for supplying an alternating current to the first electrode and the second electrode, the frequency of the alternating current is 2-20 kHz, and the voltage of the alternating current is 4000-14000 V
